# EUROPEAN PATENT APPLICATION

(11) **EP 1 508 758 A1**
(43) Date of publication of application: **23.02.2005**
(21) Application number: 04019558.8
(22) Date of filing: 18.08.2004
(51) Int. Cl.: F25B 41/06, F16K 47/10

(54) **Valve**

(30) Priority: 21.08.2003 DK 200301194
(71) Applicant: A/S Dybvad Stalindustri, 9352 Dybvad (DK)
(72) Inventor: Tanderup, Svend, 9000 Aalborg (DK)
(74) Representative: Olsen, Peter Vestergaard

(57) **Abstract**

For controlling the coolant flow in cooling units in a plate freezer, a valve (6) is inserted that allow normal flow-through in one direction, but only limited flow-through in the opposite direction. The valve is designed with a valve chamber (12) in which is provided a movable valve body (20). In a first position of the valve body (20) (Fig. 2b), the valve body (20) only allows limited flow-through of coolant through a central hole (22). In a second position (Fig. 2a), where the fluid flow has changed to the opposite direction, the valve body (20) is pressed away from its valve seat (23). Due to the size of the valve chamber (12) and the use of legs (21) on the valve body (20), a substantially larger flow-through of coolant is allowed.

Applied to cooling units of a plate freezer, in the first position the valve acts as a flow resistance, meaning even distribution of coolant in a freezing stage for the cooling unit when coolant is to flow from a distribution chamber to the cooling unit. When the cooling unit (1) is to be defrosted, the coolant is sent the opposite way through the cooling unit (1) through the valve chamber (12) of the valve (6), whereby the valve opens up and allows a rapid flow-through of coolant and thereby a rapid and uniform defrosting of the cooling unit (1).

## Description

### Background of the Invention

The invention concerns a valve with a valve housing including a first and a second aperture for the flow-through of fluids, where a valve body is disposed in the flow path between the two apertures, the valve body being movable relative to the valve housing, and where the valve body is seated in the valve housing so that it may assume a first position in contact with a valve seat in the valve housing under the action of a fluid flow from the first aperture to the second aperture, as the valve body has a circular rim adapted for sealing contact against the valve seat, and that the valve body may assume a second position in the valve housing under the action of a fluid flow from the second aperture to the first aperture, where the valve is adapted for allowing fluid flow between the two apertures in mutually opposite directions of flow irrespectively of the position of the valve body, as the valve body is provided with a central hole for flow-through of fluid, where the valve body and the adjacent internal parts of the valve housing are adapted so that the least total flow-through area for the fluid in the first position of the valve body is substantially less than the least total flow-through area for the fluid in the second position of the valve body.

WO 00/11383 describes such a two-way valve for use in heating and cooling systems. The valve thus allows normal flow from the second aperture to the first aperture, while by flow in the opposite direction, i.e. from the first aperture to the second aperture, a shift in the position of the valve body occurs in the valve housing so that the flow-through area and thereby the flow rate are substantially reduced. The valve body in the prior art valve is mainly made up of a solid cylindric body with a central throughgoing hole, where the body is provided externally with longitudinal projections, which are not defined in detail, for contact with the inner side of the valve housing so that a fluid flow may occur around the valve body in its second position also. With the shown construction, there are plural, however long and relatively narrow flow paths around the outer side of the valve body, and therefore it is restricted how great increase in the flow-through area that may be attained by changing from the first to the second opposite flow direction.

In connection with controlling the fluid flow from a distribution chamber for coolant to the individual cooling units in a plate freezer, and in order to ensure uniform distribution of liquid or gaseous medium from the distribution chamber to the cooling unit during freezing, valves have hitherto not been used, but in some cases it has been decided to insert a flow resistance, e.g. an orifice, in the line between distribution chamber and the individual cooling units. A uniform distribution of coolant to the individual units may thereby be ensured, even in case of many units. However, this measure has the drawback that when the plate freezer is to be defrosted by taking out the frozen blocks between the plate freezer units, the return flow of the medium to the distribution chamber is slowed down. This means slower defrosting in a situation where rapid release of frozen items between the cooling units is desired.

### Description of the Invention

The invention has the purpose of providing a valve that compared with prior art may allow greater flow-through in the second direction of flow in relation to the first direction of flow, while at the same time a compact design of the valve body and stable seating of the valve body in the valve housing are achieved.

This is achieved with a valve of the above kind which is peculiar in that the valve body has a number of legs that are spaced apart from its centre, the legs extending in the direction of movement of the valve body and away from the valve seat for the first position of the valve body and away from the central hole.

The legs are then acting as guides in relation to the internal faces of the valve housing in which the valve body is seated. The openings between the legs allow a far more free fluid flow in the second position of the body than by the prior art valve. Finally, a compact and space-saving design of the valve body is maintained.

In order to improve the abutting of the legs against a stop in the second position of the valve body, or for improving its seating in the valve housing, it may be preferred that the ends of the legs being farthest from the central hole, are mutually joined by an annular structure.

In some cases it may be desired to have the valve body biased against its first position in case of weak fluid flows. This may be achieved by designing the valve so that the valve body is biased towards its first position by a spring that extends in between the legs and is seated around a pin or pipe stub secured to the valve housing.

### The Drawing

Embodiments of the valve according to the invention are described in more detail below with reference to the drawing, where:
- Fig. 1: shows a cooling unit in a plate freezer with connected hoses for coolant and distribution chambers;
- Figs. 2a-b: show a valve according to the invention in a first embodiment at two different positions of the valve body;
- Fig. 3: shows the embodiment of Fig. 2 as exploded view;
- Figs. 4a-b: show a second embodiment of the valve according to the invention at two different positions of the valve body;
- Fig. 5: shows the embodiment of Fig. 4 as exploded view;
- Fig. 6: shows a second embodiment of the valve body in perspective view; and
- Fig. 7: shows the same as Fig. 6 but in section along the axis of symmetry of the valve body.

### Description of Embodiment Examples

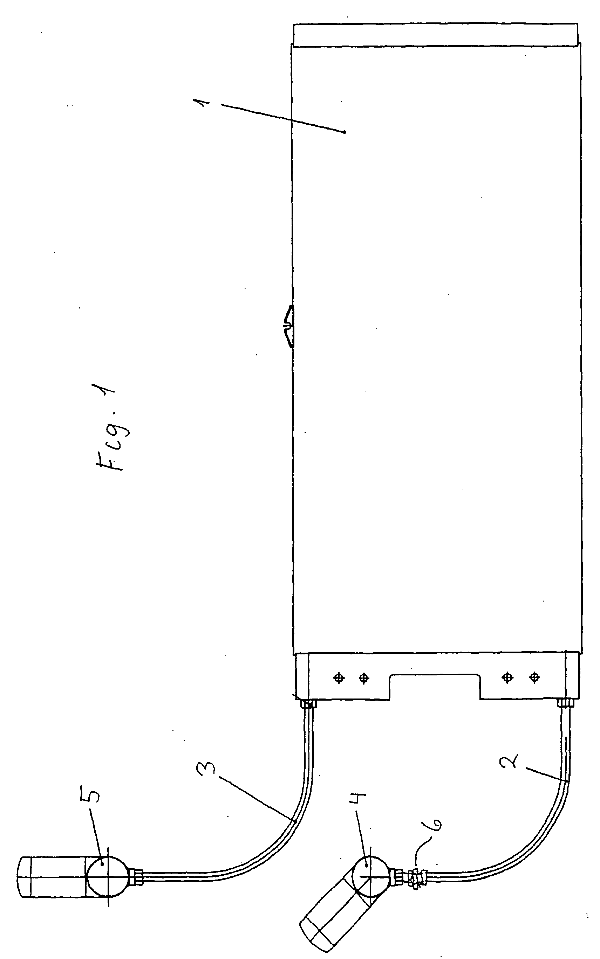

Prior art plate freezers, e.g. of the type used in the food industry, consist in principle of a row of flat juxtaposed cooling units 1 that are held in position by a frame (not shown). On Fig. 1 is only shown a single cooling unit 1. Between the cooling units 1 there are openings or spaces where e.g. food products can be frozen.

Coolant is supplied to the cooling unit 1 via a hose 2 and is withdrawn via a hose 3. The supply is effected from an inlet chamber 4 which also functions as distribution chamber for coolant. The distribution chamber 4 is thus connected to many hoses 2, one hose 2 for each cooling unit 1. Similarly, an outlet from the unit 1 is connected to an outlet hose 3 leading to an outlet chamber 5 which hence is common to all hoses 3.

In the inlet for each hose 2, a valve 6 according to the invention is inserted. The valve 6 is here shown as connected to the distribution chamber 4, but may also be placed elsewhere, e.g. at the cooling unit 1. Alternatively, the valve 6 can be disposed at the outlet hose 3 with about the same advantages. During operation, the valve 6 is functioning in the way that it acts as a flow resistance by the supply of coolant from the chamber 4 to the unit 1, while during defrostning by supplying hot gas or other thawing fluid through hose 3, an opening of the valve 6 is effected so that rapid emptying of the cooling unit 1 occurs, irrespectively whether the medium therein is liquid or liquid mixed with gas.

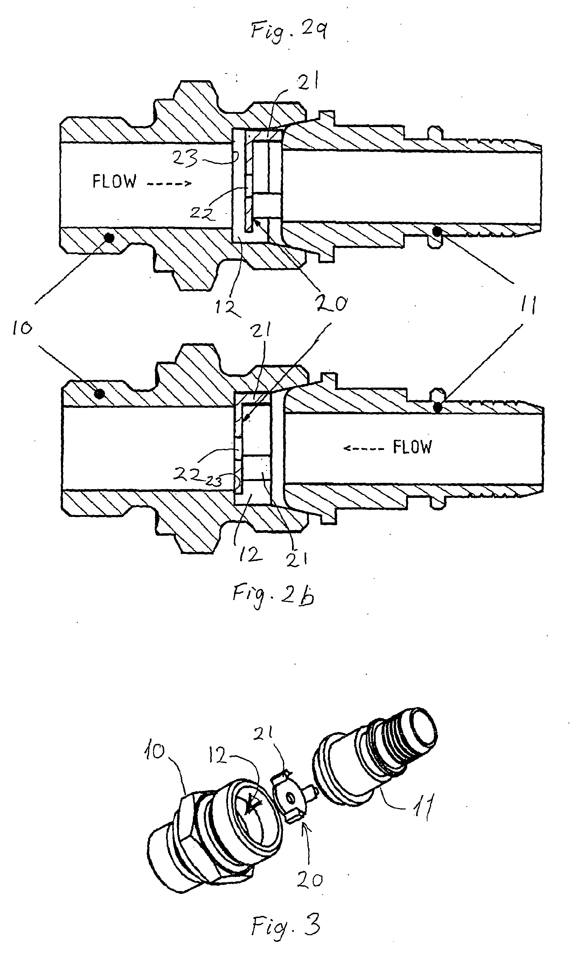

Common to the two embodiments of the valve shown in Figures 2a - 5 is that they are made up of a valve housing consisting of two parts 10 and 11 that are assembled by a not shown union nut. Between the parts 10, 11, a chamber 12 is arranged which contains a movable valve member.

On Figs. 2a, 2b and 3 is seen the first embodiment, where the valve member 20 is shaped as a flat disc from which three legs 21 disposed at the edge of the disc project perpendicularly to one side of the disc. The legs 21 are serving as guides for the valve body 20 in the chamber 12 and as spacers when the valve body 20 is in the position shown on Fig. 2a. In this embodiment, the valve body 20 has a central hole 22 which is here the only flow-through possibility for a medium in the situation shown on Fig. 2b. In this situation, the rim of the valve body 20 has sealing contact against a valve seat 23 in the part 10. The valve housing may be arranged with stop for the legs in the second position of the valve body, e.g. at the end of part 11 and shown on Fig. 2b. It appears from the drawing that the valve body can be made very compact in the direction of flow.

As shown in the situations on Figs. 2a and 2b, the valve body 20 may assume two different positions. The first position is seen on Fig. 2b, where the flow of coolant occurs from the right to the left. Thereby, the flow presses the valve body 20 to the left in contact against the seat 23, and the coolant is thus to pass the small opening 22 which thus constitutes a flow resistance. If defrosting of the plate freezer is wanted, hot gas or heated coolant is conducted in the opposite direction, i.e. from the left to the right, as seen on Fig. 2a. The valve body 20 is thereby moved to the right until the legs 21 are abutting on one end of the part 11. The medium may thereby, in addition to passing the hole 22, also pass around the disc and between the legs 21 in the chamber 12 and thereby onwards through the part 11. The opening 22 is calibrated for exerting a flow resistance so that the flow rate in the first position of the valve body is less than 25% of the flow resistance in the second position of the valve body, e.g. between 5 and 15 %.

When the valve element 20 assumes its second position, i.e. entirely open position, a reduction in the flow resistance is effected, so that liquid or liquid traps in the cooling unit 1 are removed quickly, and gas may be circulated more rapidly. A rapid emptying of cooling units may thus be effected, particularly if liquid, with considerably greater viscosity than gas, stands in the cooling unit. Warm gas may then flow quicker through the unit 1. Consequently, the defrosting time may be reduced and the defrosting temperature on the cooling plates becomes uniform more quickly, whereby it is avoided that the frozen blocks between the cooling units 1 are thawed at the top, as previously in many situations by the prior art, and the time for defrosting the inlet distribution chamber and the outlet distribution chamber becomes shorter and more uniform.

In general, the valve according to the invention may advantageously be used in any cooling circuit with evaporator plates which are to be thawed quickly.

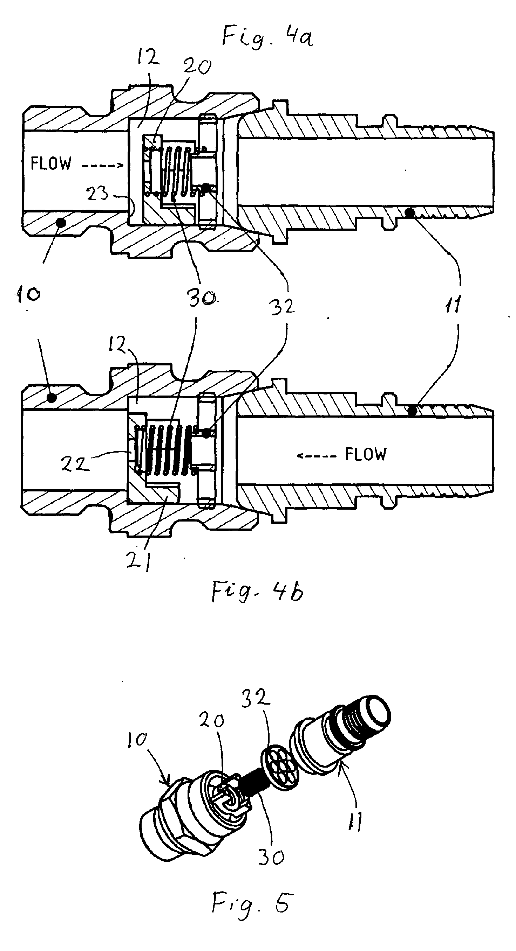

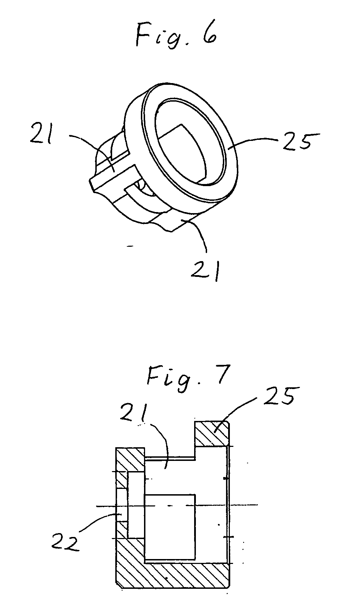

The second embodiment shown on the Figures 4a, 4b and 5 differs from the first embodiment in that a helical spring 30 is used which holds the valve body 20 in contact against a valve seat 23 in the part 10. One end of the spring 30 is fixed by a perforated disc or other open structure 32 that is provided with a tubular stub 33 at its centre, the stub 33 together with the other holes or apertures in the disc 32 allowing flow of medium therethrough. The disc 32 is screwed on the part 10. The other end of the spring 30 is attached to the movable valve body 20. The valve body 20 is also here designed with a central hole 22 which thus functions as the only flow path in the position shown on Fig. 4b.

In the first position of the valve body 20 shown on Fig. 4b, where the fluid flow is coming from the right, the valve body 20 will be pressed to the left against the seat 23, partly by the spring 30 and partly by the fluid flow. When the fluid flow is reversed and comes from the left as shown on Fig. 4a, the valve body 20 will lift from the seat 23, and the medium may flow around the body 20 in the chamber 12 and further on through the perforations in the disc 32. Due to the spring 30, the valve body 20 will not necessarily be in contact with the structure 32 in the second position of the valve body.

In a second embodiment of the valve body shown on Figs. 6 and 7, the ends of the legs 21 opposite the opening 22 are connected with or made in one piece with an annular structure 25 that can provide improved guiding of the valve body inside the valve housing and/or a better contact surface, if contact with the valve housing is achieved in the second position of the body, cf. Figs. 2a and 4a. The legs 21 are formed as projections here in the area around the central hole 22, allowing a greater flow-through area around the valve body in its second position. This second embodiment of the valve body may be combined with any of the preceding embodiments.

Other embodiments are possible. For example, more or less legs may be used in the valve body, if appropriate.

## Claims

1. Valve with a valve housing including a first and a second aperture for the flow-through of fluids, where a valve body is disposed in the flow path between the two apertures, the valve body being movable relative to the valve housing;
and where the valve body is seated in the valve housing so that it may assume a first position in contact with a valve seat in the valve housing under the action of a fluid flow from the first aperture to the second aperture, as the valve body has a circular rim adapted for sealing contact against the valve seat;
and that the valve body may assume a second position in the valve housing under the action of a fluid flow from the second aperture to the first aperture;
where the valve is adapted for allowing fluid flow between the two apertures in mutually opposite directions of flow irrespectively of the position of the valve body, as the valve body is provided with a central hole for flow-through of fluid;
where the valve body and the adjacent internal parts of the valve housing are adapted so that the least total flow-through area for the fluid in the first position of the valve body is substantially less than the least total flow-through area for the fluid in the second position of the valve body;
**characterised in that** the valve body has a number of legs that are spaced apart from its centre, the legs extending in the direction of movement of the valve body and away from the valve seat for the first position of the valve body and away from the central hole.

2. Valve according to claim 1, **characterised in that** ends of the legs farthest from the central hole are joined by an annular structure.

3. Valve according to claim 2, **characterised in that** that the valve body is biased towards its first position by a spring that extends in between the legs and is seated around a pin or pipe stub secured to the valve housing.
